(19) Europäisches Patentamt

European Patent Office

Office européen des brevets

(11) **EP 1 184 679 A1**

(12) **DEMANDE DE BREVET EUROPEEN**

(43) Date de publication:
**06.03.2002 Bulletin 2002/10**

(51) Int Cl.7: **G01S 7/282**, G01S 7/03

(21) Numéro de dépôt: **01402137.2**

(22) Date de dépôt: **07.08.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **11.08.2000 FR 0010585**

(71) Demandeur: **Thales**
**75008 Paris (FR)**

(72) Inventeurs:
• **Esposito, Pierre. Thales Intellectual Property**
  **94117 Arcueil Cedex (FR)**
• **Ruffenach, Olivier. Thales Intellectual Property**
  **94117 Arcueil Cedex (FR)**

(74) Mandataire: **Dudouit, Isabelle**
**Thales Intelectual Property 13, avenue Président Salvador Allende**
**94117 Arcueil Cedex (FR)**

(54) **Procédé et dispositif de codage/décodage de la répartition de puissance sur les sorties d'un système**

(57) L'invention concerne un procédé et un dispositif de codage/décodage de la répartition de puissance sur les sorties d'un système.

Le codeur de répartition 8 comporte un élément qui reçoit un signal s(t) et une information de répartition i(t), et qui superpose ladite information de répartition i(t) reçue audit signal s(t) reçu. L'information i(t) permet de répartir, plus tard, la puissance totale $P_s$ dudit signal s(t) sur la ou lesdites sorties $\{S_\Gamma\}$ d'un système $\Gamma$.

Le décodeur de répartition 10 comporte:

• une ou plusieurs entrées sur la ou lesquelles est reçu un signal codé c(t) ou un signal codé divisé en plusieurs signaux L $c_j(t)$ $_{j\in[1,2N]}$ comportant le signal utile s(t) et l'information de répartition i(t), et

• une ou plusieurs sorties reliées aux sorties $\{S_\Gamma\}$ dudit système $\Gamma$ vers lesquelles ledit signal s(t) est émis en répartissant la puissance totale reçue $P_s$ sur lesdites sorties $\{S_\Gamma\}$ suivant ladite information de répartition i(t).

Cette invention permet, par exemple, une commutation rapide à basse puissance des sorties d'un système forte puissance, et la programmation d'un système à sorties variables en puissance.

Fig. 4

EP 1 184 679 A1

**Description**

L'invention concerne un procédé et un dispositif de codage/décodage de la répartition de la puissance sur les sorties d'un système. Une application possible de l'invention est la réalisation d'émetteurs de forte puissance telle que, par exemple, ceux utilisés par les interrogateurs connus sous l'abréviation anglo-saxonne IFF de "Identification Friend or Foe", c'est à dire identification ami ou ennemi en français, à l'aide de radars secondaires.

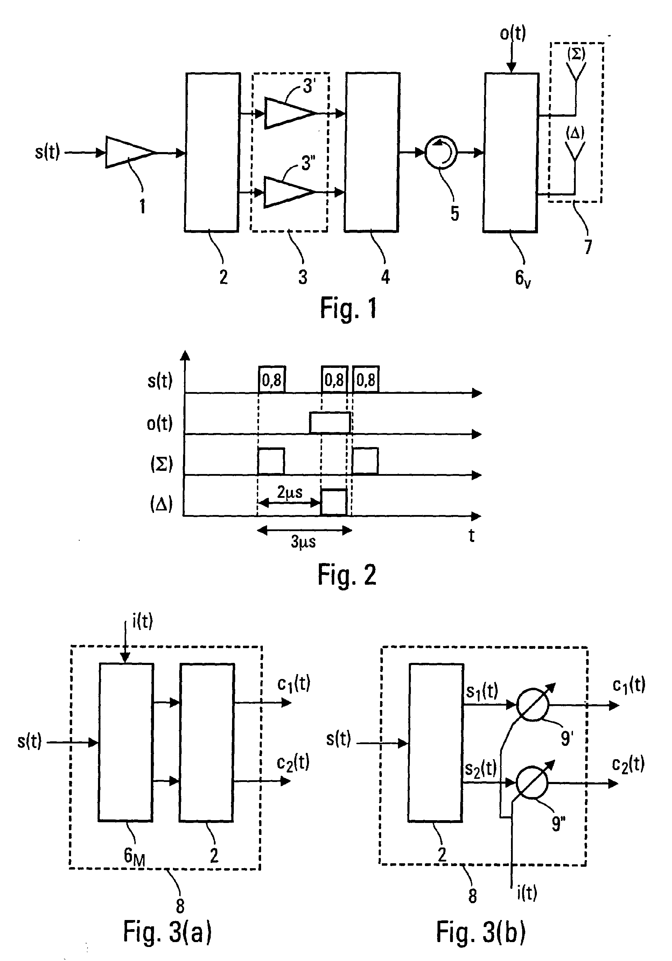

Comme le montre la figure 1, la chaîne actuelle d'émission utilisée dans la réalisation d'émetteurs IFF est constituée, dans l'ordre suivant, d'un préamplificateur 1 (driver en anglais), d'un diviseur de puissance 2 à deux voies, d'un dispositif d'amplification 3 parallèle à deux voies comportant un amplificateur 3' et 3'' sur chaque voie, d'un dispositif de recombinaison 4 à deux voies, d'un circulateur 5, d'un dispositif $6_v$ de commutation à deux voies formées de diodes PIN et d'un dispositif d'émission 7 formé par deux antennes d'émission, une antenne somme $\Sigma$ et une antenne différence $\Delta$. Un ordre de commutation o(t) est appliqué au signal s(t) via le dispositif $6_v$ de commutation de sortie.

Comme le montre la figure 2, le signal d'interrogation s(t) d'un émetteur IFF comporte trois impulsions, la première et la dernière étant émise par l'antenne $\Sigma$ et celle du milieu par l'antenne $\Delta$. Afin de satisfaire les exigences des spécifications IFF ISLS (abréviation de Identification Friend or Foe Interrogation Side Lobe Suppression, c'est à dire identification ami ou ennemi avec suppression des lobes secondaires à l'interrogation en français), la commutation d'antenne entre l'émission de la seconde porte du signal d'interrogation s(t) et celle de la troisième porte doit être rapide de l'ordre de quelques centaines de nanosecondes (<200ns).

La mise en oeuvre d'une telle architecture pour la réalisation d'un commutateur de puissance supérieure à 2 kW crête à temps de commutation rapide (<200ns) est délicate voir impossible. En effet, la chaîne actuelle d'émission utilisée dans la réalisation d'émetteurs à forte puissance comporte un commutateur de puissance $6_v$ ayant une vitesse de commutation relativement faible (de l'ordre d'1 $\mu$s). Cette vitesse de commutation lente est, en fait, due à la volonté d'avoir des émetteurs à forte puissance, car la tenue en tension des diodes PIN composant le commutateur est proportionnelle à l'épaisseur de leur zone intrinsèque, alors que leur vitesse de commutation, qui est liée à la durée de vie des porteurs minoritaires, est inversement proportionnelle à cette même épaisseur. De plus, la structure classique des émetteurs IFF impose l'utilisation d'un circulateur 5 entre le dispositif d'amplification 3 et la commutation $6_v$ en raison d'un taux d'onde stationnaire (TOS) infini, ce qui implique l'utilisation de diodes PIN ayant une tenue en tension double par rapport à la valeur maximale. D'où un ralentissement supplémentaire de la vitesse de commutation.

La présente invention permet de palier cet inconvénient en utilisant, au lieu du commutateur en aval, un codeur de répartition basse puissance en amont de l'amplification et un décodeur de répartition permettant une commutation des voies de sortie.

A cet effet, l'invention a pour objet un procédé de codage de répartition caractérisé en ce qu'il comporte une étape de superposition sur un signal s(t) d'une information i(t) de répartition permettant de répartir, plus tard, la puissance totale $P_s$ dudit signal s(t) se présentant en sortie d'un système $\Gamma$ sur une ou plusieurs sorties $\{S_\Gamma\}$ dudit système $\Gamma$.

Ce procédé est utilisé par le codeur de répartition caractérisé en ce qu'il comporte un élément qui:

- reçoit un signal s(t),
- reçoit une information de répartition i(t) permettant de répartir, plus tard, la puissance totale $P_s$ dudit signal s(t) sur la ou lesdites sorties $\{S_\Gamma\}$ d'un système $\Gamma$, et
- superpose ladite information de répartition i(t) reçue audit signal s(t) reçu.

Afin de décoder l'information de répartition, l'invention propose aussi un procédé de décodage de répartition caractérisé en ce qu'il comporte au moins les étapes suivantes:

- la réception d'un signal codé c(t) ou d'un signal codé divisé $(c_j(t))_{j \in [1,2N]}$ comportant un signal utile s(t) et une information de répartition i(t),
- l'émission dudit signal s(t) vers chacune des sorties $\{S_\Gamma\}$ d'un système $\Gamma$ en répartissant la puissance totale reçue $P_s$ sur lesdites sorties $\{S_\Gamma\}$ suivant ladite information de répartition i(t).

Ce procédé est utilisé par le décodeur de répartition caractérisé en ce qu'il comporte:

- une ou plusieurs entrées sur la ou lesquelles est reçu un signal codé c(t) ou un signal codé divisé $(c_j(t))_{j \in [1,2N]}$ comportant un signal utile s(t) et une information de répartition i(t) de manière identique ou différente pour chaque signal,
- plusieurs sorties reliées aux sorties $\{S_\Gamma\}$ d'un système $\Gamma$ sur lesquelles ledit signal s(t) est émis en répartissant la puissance totale reçue $P_s$ suivant ladite information de répartition i(t).

Selon l'invention, il est aussi proposé une chaîne d'émission comportant au moins le codeur de répartition et le décodeur de répartition décrits ci-dessus.

L'architecture ainsi obtenue permet une commutation de la sortie de puissance en améliorant les paramètres suivants:

- la vitesse de commutation, la commutation s'effectue en moins de 300 nanosecondes;
- la tenue en puissance de la fonction de commutation; et
- la tenue en taux d'ondes stationnaires (TOS) de la fonction commutation qui devient infinie.

Cette architecture permet également l'optimisation du bilan de puissance d'une chaîne d'émission en permettant de masquer les pertes de la fonction de commutation.

De plus, cette architecture est moins complexe car elle permet d'utiliser des composants aux spécifications standards communément utilisé dans l'industrie des semi-conducteurs.

D'autres caractéristiques et avantages de l'invention apparaîtront plus clairement à l'aide de la description qui suit faite à titre d'exemple et en regard des figures annexées qui représentent :

- Figure 1, un mode de réalisation de la chaîne d'émission avec commutateur de puissance $6_v$ en aval selon l'art antérieur,
- Figure 2, un diagramme des signaux entrant et sortant de la chaîne d'émission selon l'art antérieur,
- Figure 3 (a), un codeur de répartition 8 selon l'invention,
- Figure 3 (b), une variante du codeur de répartition 8 selon l'invention,
- Figure 4, un système $\Gamma$ comportant un codeur de répartition 8 et un décodeur de répartition 10 selon l'invention,
- Figure 5, un exemple de réalisation d'un système selon l'invention: une chaîne d'émission IFF.

La figure 3(a) montre un exemple de réalisation d'un codeur de répartition 8 selon l'invention. Ce codeur de répartition 8 comporte un commutateur $6_M$ qui reçoit un signal s(t) et une information i(t) de répartition permettant la sélection d'une des deux entrées du diviseur 2. Le diviseur 2 divise, comme son nom l'indique, le signal s(t) en deux signaux $s_1$(t) et $s_2$(t). La sélection d'une des deux entrées du diviseur 2 par le commutateur $6_M$ permet de superposer aux signaux $s_1$(t) et $s_2$(t) l'information de répartition i(t). La superposition de cette information de répartition i(t) aux signaux $s_1$(t) et $s_2$(t) est effectuée, par exemple, par le biais d'une modulation de phase différentielle entre les voies parallèles en sortie du diviseur 2. La division de puissance peut, alors, être effectuée par un coupleur 3dB/90°, dont les propriétés sont telles que l'information de répartition i(t) est superposée au signal comme décrit ci-dessus. Les signaux c1(t) et c2(t) résultants de cette modulation de phase différentielle comporte le signal s(t) divisé en puissance, c'est à dire s1(t) et s2(t) respectivement déphasé ou non de 90° suivant l'entrée du diviseur 2 sur laquelle le signal s(t) arrive, c'est à dire suivant la valeur de i(t).

$$c_j(t)=f_j(s_j(t),i(t))$$

avec j∈[1,2N]

La figure 3(b) montre une variante de ce codeur de répartition 8 selon l'invention. Le codeur de répartition 8 comporte un diviseur 2 qui reçoit un signal s(t) et le divise en deux signaux $s_1$(t) et $s_2$(t). Ce sont deux déphaseurs 0°/90° 9' et 9" positionnés sur les deux voies en sortie du diviseur 2 qui reçoivent l'information de répartition i(t) et se positionnent sur la valeur 0° ou 90° pour le déphaseur 9' et inversement sur la valeur 90° ou 0° pour le déphaseur 9" suivant cette information i(t). Les signaux c1(t) et c2(t) résultants sont dits modulés en phase différentiellement.

$$c_j(t)=g_{\theta j}(s_j(t),i(t))$$

avec j $\in$ [1,2N] et $\theta_j \in$ [0°,90°]

Le diviseur de puissance 2 utilisé, dans ce cas, peut être un coupleur 3dB/90° ou un coupleur WILKINSON, par exemple. Le diviseur 2 représenté sur la figure 3(b) est un coupleur WILKINSON. Dans le cas où le diviseur 2 serait un coupleur 3dB/90°, sa deuxième entrée est reliée à une charge qui peut être de 50 Ohms, par exemple. Mais le codeur 8 fonctionne quelle que soit la valeur de cette charge.

L'information de répartition i(t) superposée permet par la suite de répartir la puissance totale $P_s$ se présentant à la sortie d'un système $\Gamma$ sur une ou plusieurs sorties {$S_\Gamma$} dudit système $\Gamma$ pour transmettre le signal s(t). Cette information de répartition i(t) peut varier continûment ou discontinûment dans le temps. Les déphaseurs peuvent par exemple varier continûment entre 0° et 90° (inclus) et inversement selon la valeur de i(t). Car l'information de répartition i(t) peut, par exemple, indiquer:

- que toute la puissance $P_s$ doit être transmise sur une seule sortie $S_\Gamma$ à un instant donné t, ou
- la proportion de la puissance $P_s$ qui doit être transmise sur chaque sortie $S_\Gamma$ à un instant donné t.

Les exemples de codeur de répartition 8 ci-dessus ne sont pas limitatifs. Le diviseur 2 peut comporter une ou de 2 à 2N sorties (N∈ℵ*) Les valeurs de l'angle $\theta_j$ ne se limitent pas à 0° et 90° ni même à l'intervalle [0°,90°]. Les fonctions fj ou $g_{\theta j}$ peuvent être identiques sur une ou plusieurs voies ou toutes distinctes. La superposition de l'information de répartition i(t) au signal s(t) ne se limite pas à la modulation de phase différentielle. Cette superposition de l'information de répartition i(t) sur le signal s(t) peut être effectuée par n'importe quelle fonction continue ou discontinue utilisant ou non un diviseur 2.

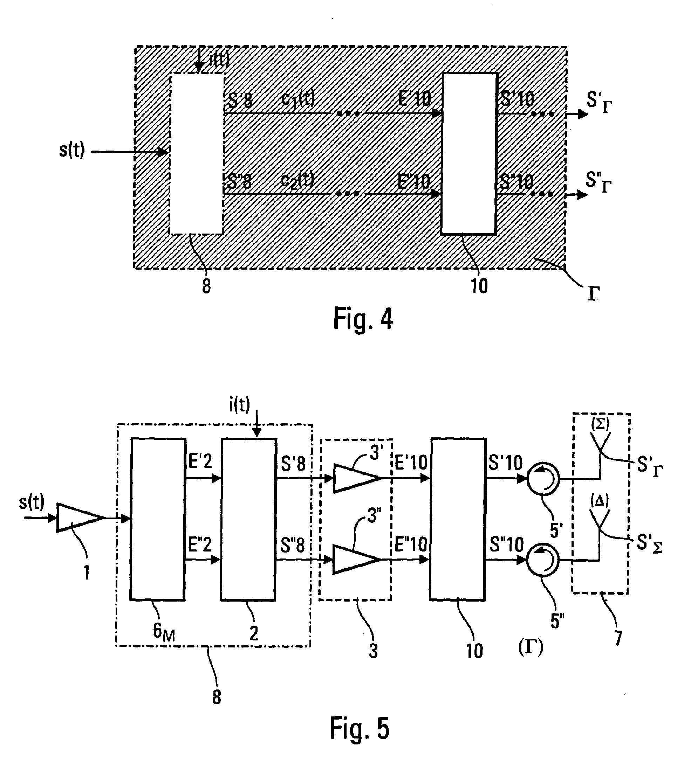

La figure 4 montre un exemple de système $\Gamma$ selon l'invention. Le codeur de répartition 8 comporte deux voies de sortie relié directement ou indirectement aux deux entrées du décodeur de répartition 10. Si l'information de répartition i(t) a modulé en phase différentiellement les deux voies en sortie du codeur de répartition 8, le décodeur de répartition 10 effectue une démodulation. Cette démodulation se traduit physiquement par l'obtention de la somme des puissances présentes sur les deux voies à l'entrée $E'_{10}$ et $E''_{10}$ du décodeur de répartition 10 sur l'une ou l'autre de ses sorties $S'_{10}$ ou $S''_{10}$ suivant les états de phase sur les entrées $E'_{10}$ et $E''_{10}$. Le décodeur de répartition 10 comprend, par exemple, un coupleur 3dB/90° qui démodule l'information de répartition i(t). Le décodeur de répartition comporte de manière générale, un coupleur 3dB/n°avec n entier (3dB/90°, 3dB/180°, 3dB/45°...). Les propriétés de répartition en phase des coupleurs 3dB/90° sont connues dans l'état de l'art [Anaren, RF & Microwave components - Reference: M 1951-79, February 1997].

De manière générale, le décodeur de répartition 10 reçoit un ou plusieurs signaux comportant le signal utile s(t) et l'information de répartition i(t). Les signaux reçus par le décodeur 10 correspondent aux signaux émis par le codeur 8 ayant ou non subi un ou plusieurs traitements intermédiaires. Le décodeur de répartition 10 décode et utilise l'information de répartition i(t) pour émettre le signal utile s(t) sur une ou plusieurs des sorties $\{S_\Gamma\}$ du système $\Gamma$ en répartissant, selon l'information de répartition i(t) décodée, la puissance totale $P_s$ entrante dans le décodeur 10 sur les sorties $S'_{10}$ et $S''_{10}$ du décodeur 10, chacune étant reliée à une sortie, respectivement $S'_\Gamma$ et $S''_\Gamma$, du système $\Gamma$.

$$\sum_{j\in[1,2N]} P_{E'^j_{10}} = P_s = \sum_{l\in[1,L]} P_{S'^l_{10}}$$

Le nombres de voies en sortie du codeur de répartition 8 étant identique au nombre de voies en entrée du décodeur de répartition 10, le nombre de voies en entrée du décodeur de répartition 10 est 1 ou de 2 à 2N ($N\in\aleph^*$). Le nombre L de sorties du décodeur de répartition 10 est, quant à lui, identique à celui du système $\Gamma$ et n'est pas limité ($L\in\aleph^*$).

La figure 5 montre un exemple de réalisation d'un système $\Gamma$ selon l'invention : une chaîne d'émission IFF. Le préamplificateur 1 est suivi par le codeur de répartition 8 comportant, par exemple un commutateur et un diviseur 2 voies 2 (coupleur 3dB/90°, par exemple), un amplificateur 3' et 3" sur chacune des deux voies constitué par un transistor double à forte puissance, puis un décodeur de répartition 10. Le préamplificateur 1 est constitué d'un transistor RF classe C de 500W pulsé (taux de charge 1%) fonctionnant à 1030MHz. Le commutateur $6_M$ peut être du type SPDT (abréviation anglo-saxonne de Single-pole double-throw, c'est à dire, en français, unipolaires à deux directions). Il utilise, alors, le principe de commutation à diodes PIN série ou à base de lignes $\lambda$/4 commutés par des diodes PIN dont la sortie non-utilisée est couplée à une résistance (50 Ohms par exemple). Les coupleurs d'entrée, utilisés par le diviseur 2 du codeur de répartition 8, sont d'un des types suivantes: anneau hybride 3dB/90° gravé sur substrat, coupleurs 3dB/90° tri-plaque "ANAREN" (marque commerciale), coupleur coaxial 3dB/ 90° "SAGE labs" (marque commerciale)... Le coupleur de sortie du décodeur de répartition 10 est un coupleur 3dB/90° parmi les types cités précédemment. Un circulateur 5', respectivement 5", est placé sur la sortie $S'_{10}$, respectivement $S''_{10}$, du décodeur de répartition 10. Les circulateurs 5' et 5" sont identiques à ceux utilisés classiquement dans les chaînes d'émission IFF. La chaîne d'émission est terminée par un dispositif d'émission 7 comprenant une antenne sur chaque voie de sortie du décodeur de répartition 10 (une antenne $\Sigma$ et une antenne $\Delta$ dans le cas des émetteurs IFF).

Sachant que l'ordre de grandeur approximatif de la puissance du signal s(t) en sortie du préamplificateur est de 250 à 700 W, considérons l'exemple suivant dans lequel la puissance du signal s(t) observé en sortie du préamplificateur 1 est de 500W. En sortie du commutateur $6_M$, la puissance obtenue est de l'ordre de 57dBm avec un découplage supérieur à 30dB entre les deux sorties $E'_2$ et $E''_2$. En sortie du diviseur 2 de puissance, quelle que soit l'entrée utilisée $E'_2$ ou $E''_2$, une puissance de 54dBm±0.3dB est obtenue sur chacune des sorties $S'_8$ et $S''_8$ avec un déphasage de 0°±2° ou 90°±2° suivant l'entrée sélectionnée.

Le dispositif d'amplification 3 est constitué de deux transistors 3' et 3" en parallèle donnant 61dBm±0.5dB en sortie avec 54dBm en entrée et présentant une atténuation (return loss en anglais) supérieure à 15dB sur l'entrée de chaque transistor. La différence entre ces deux voies est ajustée par le réglage d'une capacité d'accord variable en sortie de chaque transistor. L'appairage en phase des deux voies ainsi obtenu est inférieur à 5°.

En sortie du décodeur de répartition 10, une puissance 63,5dBm±0.5dB sur les sorties $S'_{10}$ ou $S''_{10}$ avec un découplage supérieur à 20dB entre ces deux sorties.

Les résultats de cet exemple ont été validés entre -40°C et +70°C. Une variation de ±1dB par rapport à la puissance de sortie nominale a été observée.

Cette invention peut s'appliquer aux émetteurs radiofréquences (RF) présentant un étage de puissance final de structure parallèle. Mais, elle ne se limite pas aux émetteurs radiofréquences car elle peut, aussi être appliquée aux émetteurs hyperfréquences (HF) ou à ondes millimétriques... Plus généralement, l'invention peut être appliquée à tout dispositif nécessitant une commutation de puissance sur les sorties, par exemple pour un émetteur récepteur (E/R) à diversité d'espace, mais aussi, à tout dispositif à sorties variables en puissance.

## Revendications

1.  Procédé de codage de répartition **caractérisé en ce qu'**il comporte une étape de superposition sur un signal s(t) d'une information i(t) de répartition permettant de répartir, plus tard, la puissance totale $P_s$ dudit signal s(t) se présentant en sortie d'un système Γ sur une ou plusieurs sorties {S$_Γ$} dudit système Γ.

2. Procédé de codage de répartition selon la revendication précédente **caractérisé en ce qu'**il comporte une étape de division dudit signal s(t) en 2N signaux {s$_j$(t)}$_{j\in[1,2N]}$ sur 2N voies (N∈ℵ*), cette étape de division précédant, comportant ou suivant ladite étape de superposition.

3. Procédé de codage de répartition selon la revendication précédente **caractérisé en ce que** l'étape de superposition comporte une modulation en phase différentielle desdites voies.

4. Procédé de codage de répartition selon l'une des revendications 2 ou 3 **caractérisé en ce que** ladite étape de division comporte :

   • la réception dudit signal s(t),
   • la réception de ladite information de répartition i(t),
   • la superposition de ladite information de répartition i(t) audits signaux divisés {s$_j$(t)}$_{j\in[1,2N]}$ de manière identique ou différente,
   • l'émission des signaux codés {c$_j$(t)=f$_j$(s$_j$(t),i(t))}$_{j\in[1,2N]}$ obtenus par la superposition.

5. Procédé de codage de répartition selon la revendication précédente **caractérisé en ce qu'**il comporte une étape de commutation comprenant au moins les étapes suivantes:

   • la réception dudit signal s(t),
   • la réception de l'information de répartition i(t),
   • le choix de l'une des entrées de ladite division selon l'information de répartition i(t),
   • la transmission dudit signal s(t) à ladite entrée choisie.

6. Procédé de codage de répartition selon l'une des revendications 2 ou 3 **caractérisé en ce qu'**il comporte une étape de déphasage précédé par l'étape de division comprenant au moins les étapes suivantes :

   • la réception du signal s$_j$(t) sur chaque voie sortante de la division,
   • la réception de l'information de répartition i(t),
   • le décalage en phase du signal s$_j$(t) de chaque voie de manière identique ou différente selon ladite information de répartition i(t),
   • l'émission sur chaque voie du signal codé c$_j$(t) = $g_{\theta_j}$(s$_j$(t),i(t)) résultant du décalage en phase.

7. Codeur de répartition **caractérisé en ce qu'**il comporte un élément qui:

   • reçoit un signal s(t),
   • reçoit une information de répartition i(t) permettant de répartir, plus tard, la puissance totale P$_s$ dudit signal s(t) sur la ou lesdites sorties {S$_Γ$} d'un système Γ, et
   • superpose ladite information de répartition i(t) reçue audit signal s(t) reçu.

8. Codeur de répartition selon la revendication précédente **caractérisé en ce qu'**il comporte un diviseur (2) de puissance dudit signal s(t) en 2N signaux {s$_j$(t)}$_{j\in[1,2N]}$ sur 2N voies (N∈ ℵ*), le diviseur (2) comportant ou étant placé avant ou après l'élément effectuant ladite superposition.

9. Codeur de répartition selon la revendication précédente **caractérisé en ce que** l'élément effectuant ladite superposition est un modulateur en phase différentielle des voies sortantes du diviseur (2) ayant ou non subi un traitement intermédiaire.

10. Codeur de répartition selon l'une des revendications 8 ou 9 **caractérisé en ce que** le diviseur (2) :

   • reçoit ledit signal s(t) et ladite information de répartition i(t), et
   • superpose ladite information de répartition i(t) audits signaux divisés {s$_j$(t)}$_{j\in[1,2N]}$ de manière identique ou différente,
   • émet les signaux codés {c$_j$(t)= f$_j$ (s$_j$ (t),i(t))}$_{j\in[1,2N]}$ obtenus.

11. Codeur de répartition d'une sortie selon la revendication précédente **caractérisé en ce qu'**il comporte un commutateur (6$_M$) comprenant au moins:

   • une première entrée recevant ledit signal s(t),
   • une seconde entrée recevant ladite information de répartition i(t),
   • plusieurs sorties, chaque sortie étant reliée à une entrée dudit diviseur (2), une des dites sorties transmettant le signal s(t) reçu,
   • un dispositif reliant l'entrée du commutateur (6$_M$) recevant le signal s(t) à une sortie du commutateur (6M) transmettant le signal s(t) reçu, ladite sortie étant sélectionnée par l'information de répartition i(t) reçue sur la seconde entrée du commutateur (6$_M$).

12. Codeur de répartition selon la revendication précédente **caractérisée en ce que**:

   • le commutateur (6$_M$) est un commutateur du type SPDT (Single-Pole double-throw), c'est à dire unipolaire à deux directions, à diodes PIN avec charge interne de la sortie non-utilisée, et
   • le diviseur (2) comporte un coupleur 3dB/90°.

**13.** Codeur de répartition selon l'une des revendications 8 ou 9 **caractérisé en ce qu'**il comporte un dispositif de déphasage (9) comprenant sur chacune des voies en sortie du diviseur (2) un déphaseur (9$^j$) qui :

- reçoit ledit signal divisé s$_j$(t),
- reçoit ladite information de répartition i(t),
- décale en phase ledit signal divisé s$_j$(t) en fonction de ladite information de répartition i(t), chaque voie étant décalée de manière identique ou différente,
- émet sur chaque voie le signal codé c$_j$(t)= $g_{\theta_j}$(s$_j$(t),i(t)) résultant du décalage en phase.

**14.** Codeur de répartition selon la revendication précédente **caractérisé en ce que** les déphaseurs {9$^j$} sont des déphaseurs 0°/90° "tout ou rien" ou à variant continuement ou discontinuement.

**15.** Procédé de décodage de répartition **caractérisé en ce qu'**il comporte au moins les étapes suivantes:

- la réception d'un signal codé c(t) ou d'un signal codé divisé (c$_j$(t))$_{j \in [1,2N]}$ comportant un signal utile s(t) et une information de répartition i(t),
- l'émission dudit signal s(t) vers chacune des sorties {S$_\Gamma$} d'un système r en répartissant la puissance totale reçue P$_s$ sur lesdites sorties {S$_\Gamma$} suivant ladite information de répartition i(t).

**16.** Décodeur de répartition **caractérisé en ce qu'**il comporte:

- une ou plusieurs entrées sur la ou lesquelles est reçu un signal codé c(t) ou un signal codé divisé (c$_j$(t))$_{j \in [1,2N]}$ comportant un signal utile s(t) et une information de répartition i(t) de manière identique ou différente pour chaque signal,
- plusieurs sorties reliées aux sorties {S$_\Gamma$} d'un système Γ sur lesquelles ledit signal s(t) est émis en répartissant la puissance totale reçue P$_s$ suivant ladite information de répartition i(t).

**17.** Décodeur de répartition **caractérisé en ce qu'**il comporte:

- une ou plusieurs entrées sur la ou lesquelles est reçu un signal codé c(t) ou un signal codé divisé (c$_j$(t))$_{j \in [1,2N]}$ comportant un signal utile s(t) décalé en phase par une information de répartition i(t),
- plusieurs sorties reliées aux sorties {S$_\Gamma$} d'un système Γ sur lesquelles ledit signal s(t) est émis en répartissant la puissance totale reçue P$_s$ suivant l'état en phase du ou des signaux reçus généré par l'information de répartition i(t).

**18.** Décodeur de répartition selon l'une des revendications 16 ou 17 **caractérisé en ce qu'**il comporte un coupleur 3dB/90°.

**19.** Chaîne d'émission comportant au moins un codeur de répartition (8) selon l'une des revendications 7 à 14 et un décodeur de répartition (10) selon l'une des revendications 16 à 18.

**20.** Chaîne d'émission selon la revendication précédente **caractérisée en ce qu'**elle comporte au moins l'un des dispositifs suivants:

- un préamplificateur (1), en amont du codeur de répartition (8),
- un dispositif d'amplification (3) comprenant un amplificateur (3', 3") sur chaque voie entre le codeur de répartition (8) et le décodeur de répartition (10),
- un circulateur (5) sur chaque voie en aval du décodeur de répartition (10),
- un dispositif d'émission (7) comportant une antenne d'émission (7', 7") sur chaque voie en aval du décodeur de répartition (10) constituant chacune une des sortie S$_\Gamma$.

**21.** Chaîne d'émission selon la revendication précédente **caractérisée en ce que**:

- le préamplificateur (1) comporte un transistor radiofréquence ou hyperfréquence ou millimétrique, et
- chaque amplificateur (3$^j$) comporte un transistor à forte puissance,
- le dispositif d'émission (7) comporte une antenne somme (Σ) et une antenne différence (Δ).

Fig. 1

Fig. 2

Fig. 3(a)

Fig. 3(b)

Fig. 4

Fig. 5

**Office européen des brevets**

# RAPPORT DE RECHERCHE EUROPEENNE

Numéro de la demande

EP 01 40 2137

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X<br>Y | US 5 146 190 A (FIRMAIN GERARD)<br>8 septembre 1992 (1992-09-08)<br>* abrégé; figures 2,5,6 *<br>* colonne 4, ligne 36 - colonne 5, ligne 8 *<br>* colonne 7, ligne 10 - colonne 8, ligne 29 * | 1-11,<br>15-19<br>20,21 | G01S7/282<br>G01S7/03 |
| X | R.J. NIEMEIJER: "Doppler-polarimetric radar signal processing"<br>1996 , DELFT UNIVERSITY PRESS , DELFT<br>XP002167260<br>* Paragraphe 4.3.3 "The electrically switched polariser", page 94 - page 95 ; figure 4.3 * | 1-11,<br>15-19 | |
| Y | US 5 920 277 A (FOSTER JEREMY LE NEVE ET AL) 6 juillet 1999 (1999-07-06)<br>* abrégé; figure 2 *<br>* colonne 3, ligne 10 - ligne 33 *<br>* colonne 3, ligne 51 - colonne 4, ligne 23 * | 20,21 | |

DOMAINES TECHNIQUES RECHERCHES (Int.Cl.7)

G01S
H04B

Le présent rapport a été établi pour toutes les revendications

| Lieu de la recherche | Date d'achèvement de la recherche | Examinateur |
|---|---|---|
| LA HAYE | 13 novembre 2001 | Niemeijer, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**                     EP 01 40 2137

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-11-2001

| Document brevet cité au rapport de recherche | | Date de publication | Membre(s) de la famille de brevet(s) | | Date de publication |
|---|---|---|---|---|---|
| US 5146190 | A | 08-09-1992 | FR | 2658665 A1 | 23-08-1991 |
| | | | CA | 2036130 A1 | 17-08-1991 |
| | | | EP | 0442797 A1 | 21-08-1991 |
| | | | JP | 4227342 A | 17-08-1992 |
| US 5920277 | A | 06-07-1999 | AT | 183035 T | 15-08-1999 |
| | | | AU | 5655096 A | 29-11-1996 |
| | | | CN | 1184570 A | 10-06-1998 |
| | | | DE | 69603596 D1 | 09-09-1999 |
| | | | DE | 69603596 T2 | 04-05-2000 |
| | | | EP | 0824785 A1 | 25-02-1998 |
| | | | ES | 2137691 T3 | 16-12-1999 |
| | | | WO | 9636110 A1 | 14-11-1996 |
| | | | GR | 3031735 T3 | 29-02-2000 |
| | | | RU | 2146379 C1 | 10-03-2000 |

EPO FORM P0460

Pour tout renseignement concernant cette annexe : voir Journal Officiel de l'Office européen des brevets, No.12/82